Europäisches Patentamt

European Patent Office

Office européen des brevets

(11) Numéro de publication: **0 177 375**
**A1**

(12) **DEMANDE DE BREVET EUROPEEN**

(21) Numéro de dépôt: **85401494.1**

(22) Date de dépôt: **19.07.85**

(51) Int. Cl.⁴: **B 62 D 49/06**
**B 62 D 21/18**

(30) Priorité: **12.09.84 FR 8413985**

(43) Date de publication de la demande:
**09.04.86 Bulletin 86/15**

(84) Etats contractants désignés:
**CH DE LI**

(71) Demandeur: **BOBARD JEUNE S.A.**
**17, rue de Réon**
**F-21204 Beaune(FR)**

(72) Inventeur: **Darcy, Raymond**
**Levernois**
**F-21200 Beaune(FR)**

(74) Mandataire: **Loyer, Bertrand et al,**
**Cabinet Pierre Loyer 18, rue de Mogador**
**F-75009 Paris(FR)**

(54) Perfectionnements aux tracteurs enjambeurs.

(57) Tracteur enjambeur, caractérisé par le fait qu'il comporte : un train avant enjambeur à voie fixe; et un train arrière enjambeur à voie variable dont une seule roue (5a ou 5b) est portée par une jambe (3a) mobile latéralement de telle sorte que l'une des deux roues arrière (5a ou 5b) est fixe latéralement et est toujours sensiblement en alignement derrière la roue avant correspondante et circule toujours dans la même allée, tandis que l'autre roue arrière (5b ou 5a) est déplaçable latéralement depuis une poistion à voie étroite où elle est sensiblement en alignement derrière la roue avant correspondante (6b ou 6a) et une position à voie plus large.

Fig:1

EP 0 177 375 A1

<u>Perfectionnements aux tracteurs enjambeurs.</u>

La présente invention est relative aux tracteurs appelés tracteurs enjambeurs qui sont destinés aux cultures en ligne comme des vignes par exemple et dont le châssis est conformé de telle sorte qu'ils enjambent au moins une rangée de culture.

Les tracteurs enjambeurs sont d'un usage très répandu dans les vignobles dits étroits, c'est-à-dire dans lesquels l'écartement entre les rangées de vigne est de 0,80 m à 1,70 m environ. Cependant, il est bien évident que plus l'écartement entre les rangées est faible, plus la voie du tracteur est étroite, de sorte que ces tracteurs sont instables latéralement et donc d'un emploi qui peut être dangereux lorsque le terrain est en pente, ce qui est très souvent le cas.

On a proposé de multiples solutions pour améliorer la stabilité de ces engins. En particulier, on a proposé de disposer en tandem l'une derrière l'autre une roue avant et une roue arrière toutes deux motrices et directrices, ces deux roues roulant donc dans le même entre-rang et de disposer sur un côté pratiquement dans le plan transversal médian une roue latérale qui roule dans l'entre-rang d'à côté : ces matériels ont été largement employés mais présentent l'inconvénient d'avoir une stabilité latérale un peu limitée et de présenter d'assez grandes difficultés pour l'adaptation ou la fixation des divers outils. On a alors proposé des tracteurs qui enjambent deux rangées de vigne, on peut alors éventuellement placer le moteur et le réservoir dans l'allée comprise entre les deux rangées de vigne enjambées. Les roues avant et arrière circulant dans les deux entre-rangs situés de chaque côté. Cette solution permet d'avoir des tracteurs à voie large et donc très stables ; mais l'inconvénient est que ces tracteurs sont alors trop larges pour circuler sur les routes et surtout sur les petits chemins conduisant aux vignes. Il en résulte que, dans la pratique, leur emploi est réservé aux grandes exploitations viticoles d'un seul tenant, c'est-à-dire dans lesquelles les différentes parcelles de vigne sont jointives ou pratiquement jointives, les bâtiments d'exploitation étant sur le vignoble. Tel n'est pas le cas dans la plupart des vignobles français de vins d'appellation contrôlée.

On a alors proposé des tracteurs enjambeurs à voie variable, c'est-à-dire que le châssis et les moyens de transmission sont aménagés de telle sorte que l'on puisse faire varier à volonté l'écartement des roues avant ainsi que l'écartement des roues arrière. Il est assez facile de modifier l'écartement des roues arrière en les faisant porter par des supports coulissants et en assurant la transmission d'entraînement desdites roues par des arbres moteurs télescopiques ; par contre la variation de l'écartement des roues avant exige à chaque fois des réglages compliqués des bielles de direction de façon à maintenir le parallélisme desdites roues avant. En fait, ces changements d'écartement des roues avant et arrière sont tellement longs à exécuter que les viticulteurs essaient de déterminer un écartement qui soit un compromis entre l'écartement nécessaire dans la vigne et l'écartement sur route et, une fois cet écartement déterminé, ils ne le modifient plus, transformant ainsi leur tracteur à voie variable en un tracteur à voie fixe.

Il en résulte que dans la plus grande partie des vignobles étroits, les viticulteurs ne diposent pas de tracteurs qui soient adaptés à leurs besoins.

La présente invention a pour but de pallier cet inconvénient et concerne un tracteur enjambeur comportant : un train avant à voie étroite, fixe, enjambant une rangée de vigne ; et un train arrière à voie variable dont une roue est fixe et toujours sensiblement en alignement avec la roue avant du même côté, de façon à rouler dans la même allée, l'autre roue étant mobile latéralement. Grâce à cette disposition, on peut avoir à volonté un tracteur enjambant une seule rangée par son train avant et enjambant deux rangées par son train arrière ou bien un tracteur étroit enjambant qu'une seule rangée par son train avant et son train arrière, tracteur étroit qui peut circuler aisément sur des routes ou chemins étroits.

Le déplacement latéral de la seule roue arrière mobile latéralement peut être réalisé par des moyens mécaniques extrêmement simples de sorte que le passage d'une configuration à l'autre se fait instantanément par la simple commande d'un vérin hydraulique, sans nécessiter aucun démontage ni réglage mécanique, sans même que le conducteur n'ait à quitter son siège.

A titre d'exemple non limitatif et pour faciliter la compréhension de l'invention, on a représenté aux dessins annexés :

Figure 1, une vue schématique de face d'un tracteur enjambeur selon l'invention ;

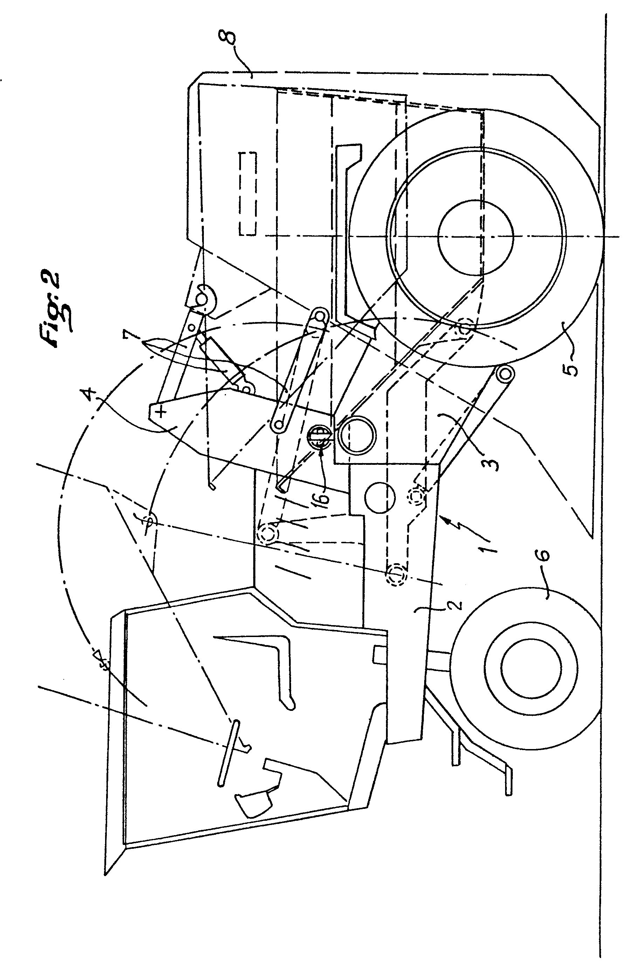

Figure 2, une vue schématique en élévation latérale du tracteur de la figure 1 ;

Figure 3, une vue en plan du tracteur des figures 1 et 2 ;

Figure 4, une vue de détail d'une variante de réalisation de la jambe arrière mobile latéralement.

En se reportant à ces figures, on voit que le châssis 1 du tracteur est analogue à celui décrit dans la demande de brevet n° 83.12153 déposée le 22 juillet 1983 par le même demandeur ; c'est-à-dire qu'il est constitué en deux parties symétriques assemblées l'une à l'autre par des entretoises, chaque partie étant elle-même constituée par un élément creux formant caisson 2, sensiblement horizontal portant la roue avant 6, un élément creux 3 dirigé obliquement vers le bas et vers l'arrière constituant la jambe porteuse de la roue motrice arrière 5 et un troisième élément 4, sensiblement vertical qui avec l'élément correspondant de l'autre partie de châssis constitue un portique portant les moyens d'attelage pour un outil agricole quelconque 8, qui dans l'exemple représenté, est constitué par un ensemble vendangeur. Cet ensemble vendangeur peut être rapidement attelé ou dételé du tracteur qui peut ainsi servir à tous les travaux de la viticulture, y compris la vendange. Cet ensemble vendangeur 8 peut, par exemple, être analogue à celui décrit dans la demande de brevet 82.20919 déposée le 14 décembre 1982 au nom du même demandeur.

Aux zones de jonction des éléments de châssis 2, 3 et 4 sont disposés -comme cela a été décrit dans la demande de brevet 83.12151 précitée- des carters 9.

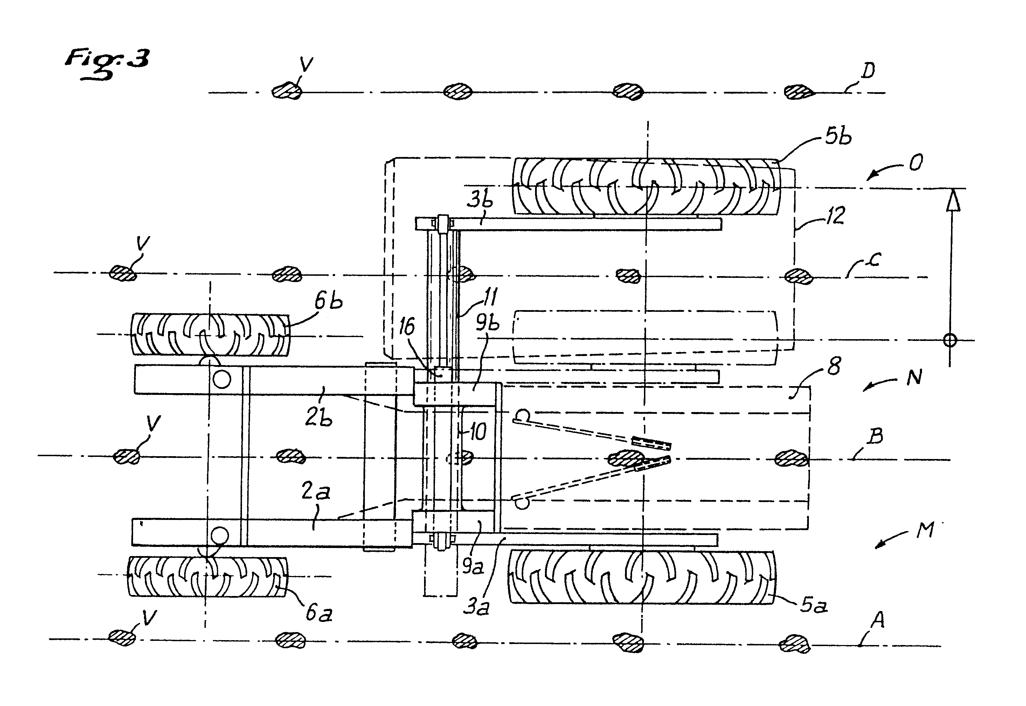

En se reportant à la figure 3, on voit que pour plus de clarté les éléments de châssis situés à gauche portent les références 2a, 3a, 5a, 6a, 9a, etc... tandis que les mêmes éléments situés à droite portent les références 2b, 3b, 5b, 6b, 9b, etc...

La figure 3 représente également des rangées A, B, C, et D de ceps de vigne V, entre lesquelles sont les allées M, N, O.

Comme on le voit sur ladite figure 3, la roue avant 6a et la roue arrière 5a du tracteur roulent dans l'allée ou entre-rang M située entre les rangées A et B ; tandis que la roue avant 6b roule dans l'allée N située entre les rangées B et C. Les positions respectives de ces trois roues 5a, 6a, 6b sont invariables ; tandis que selon l'invention, la position latérale de la roue arrière 5b est variable. Cette roue 5b peut être placée dans l'allée O, située entre les rangées C et D, ou bien dans l'allée N, c'est-à-dire en alignement ou sensiblement en alignement avec la roue avant 6b ou bien encore dans toute position intermédiaire.

Les moyens mécaniques par lesquels le déplacement latéral de la jambe 3b portant la roue arrière 5b peuvent être ceux décrits dans la précédente demande 83.12153 ou bien peuvent être constitués comme cela est représenté par des éléments télescopiques 10 et 11 commandés par un vérin 16 ou analogue.

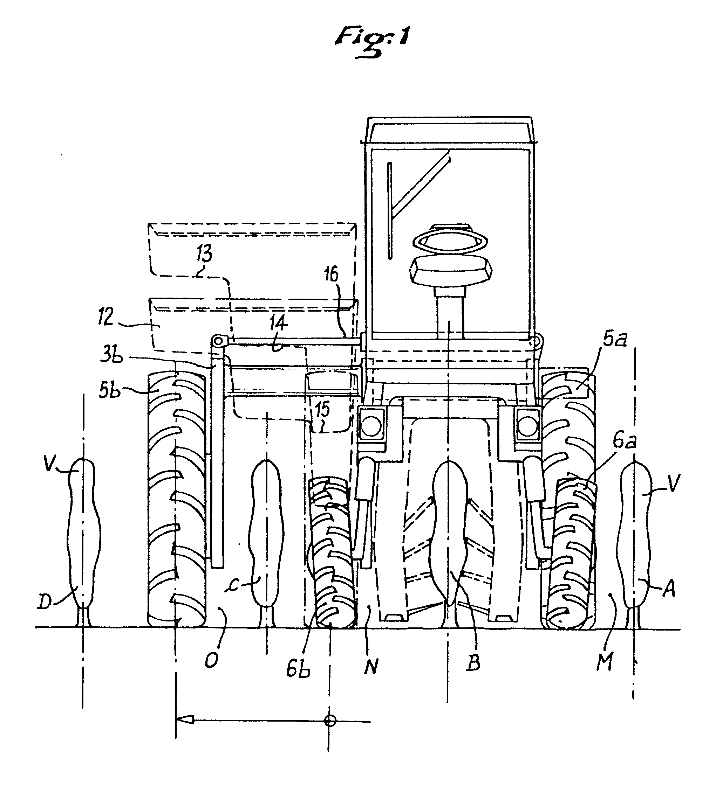

En se reportant aux figures 1 et 3, on voit que l'on peut disposer sur le côté droit du tracteur une benne à vendange 12 (ou un réservoir de liquide). Lorsque la jambe 3b (et donc la roue 5b) est en position d'extension, la benne à vendange 12 (ou le réservoir) est mise en position basse et lorsque la jambe 3b (et donc la roue 5b) est ramenée en position de voie étroite, la benne 12 (ou le réservoir) est relevée au-dessus de la roue.

On obtient ainsi un tracteur qui par la simple manœuvre d'un seul vérin peut instantanément être transformé soit en un tracteur enjambeur étroit n'enjambant qu'une seule rangée de vigne B, et par son train arrière deux rangées de vigne B et C.

On peut avantageusement disposer un contrepoids sur la roue 5b, ce qui améliore la stabilité du tracteur.

Le poids constitué par la vendange lorsque la benne 12 est pleine (ou par le réservoir plein de liquide de traitement lorsque 12 est un réservoir) améliore également la stabilité. La position haute de l'organe 12 (benne ou réservoir) n'est employée que sur route et dans ce cas, cet organe 12 est de préférence vide.

Dans l'exemple représenté à la figure 1, la benne à vendange 12 a un fond en trois gradins 13, 14, 15, de façon à pouvoir être disposé à trois hauteurs différentes : lorsque la roue 5b est en position extrême, le gradin 13 est au-dessus de la roue 5b les gradins 14 et 15 étant alors du côté intérieur de la roue 5b ; en position intermédiaire, c'est le gradin 14 qui est au-dessus de la roue 5b, le gradin 15 étant à l'intérieur et la benne 12 (ou analogue) étant légèrement soulevée ; en position étroite, c'est le gradin 15 qui est au-dessus de la roue, la benne 12 étant encore plus haute.

Cette disposition combine les avantages du tracteur étroit et du tracteur large d'une façon simple et pratique.

Bien évidemment, pour les cultures très étroites, on peut disposer le train avant de façon qu'il enjambe $n$ rangs de culture ; la roue arrière se déplaçant pour enjamber de $n + 1$ jusqu'à deux $n$ rangs de culture.

Par exemple, dans certains vignobles où l'écartement entre les rangées est de 0,80 m, on peut enjamber deux rangées avec le train arrière.

La présente invention n'est pas limitée au cas partiuclier où la roue mobile 5b est obligatoirement ramenée, hors du vignoble, en alignement ou sensiblement en alignement avec la roue avant 6b du même côté. On peut par exemple pour le vignoble champenois où l'écartement entre rangées est usuellement de 1,05 m, disposer le train avant avec une voie de 1,05 m, de sorte qu'il enjambe une rangée, et disposer la jambe arrière mobile 3b de façon que la voie arrière du tracteur soit ou bien de 2,10 m (deux rangées enjambées) ou bien de 1,70 m et dans ce dernier cas la roue 5b se trouve pratiquement à la piace de la rangée C de la figure 3 et dans cette configuration, le tracteur ne peut pas se déplacer dans les vignes, mais uniquement dans les chemins et sur les routes, la largeur de 1,70 m étant celle de la voie usuelle des véhicules routiers.

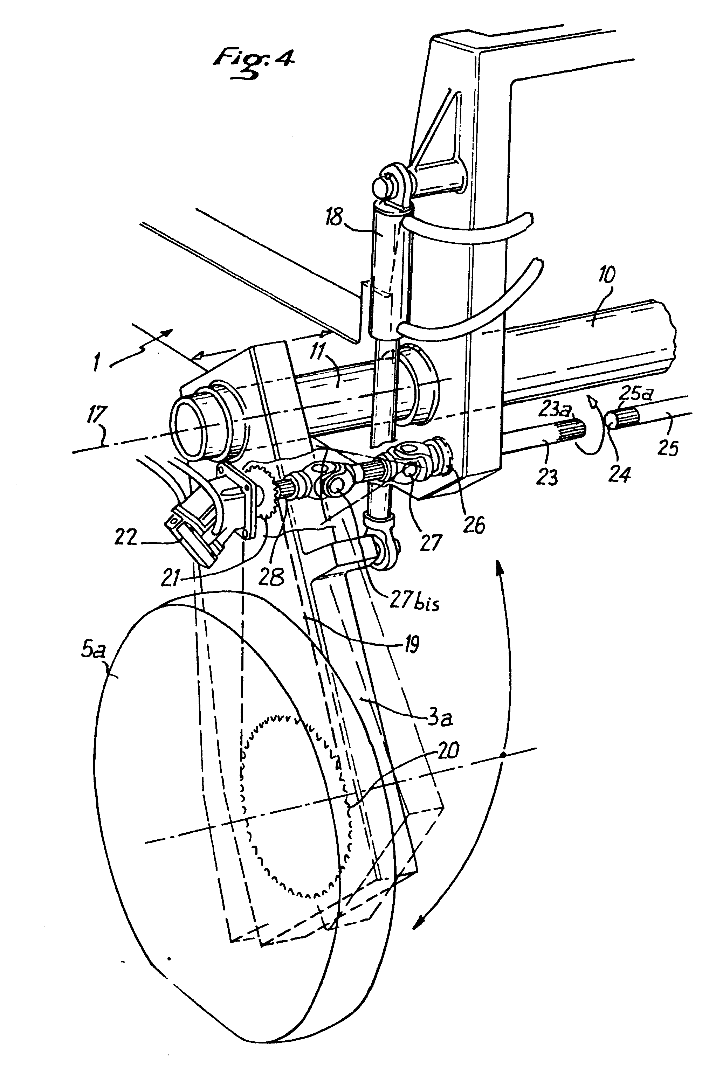

Dans l'exemple représenté, c'est la jambe gauche 3a qui est immobile de sorte que la roue arrière 5a est toujours sensiblement dans l'alignement de la roue avant 6a et circule toujours dans la même allée, mais l'inverse est évidemment possible comme cela est représenté à la figure 4 où c'est la jambe gauche 3a qui est mobile latéralement, la jambe droite 3b (non représentée à la figure 4) ne l'étant pas.

En se reportant à cette figure, on voit que l'entraînement de la roue motrice 5a se fait par l'intermédiaire d'un pignon moteur 21 qui au moyen d'une chaîne 19 entraîne un pignon 20 claveté sur l'arbre de ladite roue 5a

Ce pignon moteur 21 peut être entraîné par un moteur hydraulique 22. Il peut aussi être entraîné mécaniquement par un arbre d'entraînement 25.

Dans ce cas, cet arbre 25 est relié à un arbre coulissant 23 par un dispositif également coulissant 24 qui peut être un manchon à cannelures internes (non représenté) coulissant sur des cannelures 23a et/ou 25a situées aux extrémités des axes 23 et 25. L'arbre 23 coulisse dans un palier 26, porté par le châssis 1, et porte à son autre extrémité un joint de cardan 27. Ce joint de cardan 27 peut être relié directement à l'arbre 28 du pignon moteur 21 ou, comme cela est représenté, après interposition d'un deuxième joint de cardan 27bis (pour avoir une transmission homocinétique).

Dans ce cas, l'ensemble télescopique 10-11 joue uniquement le rôle de support de la jambe mobile latéralement (5a ou 5b).

Cette disposition permet avantageusement de faire varier l'inclinaison de la jambe support 3 autour de l'axe 17 des éléments télescopiques 10-11 au moyen d'un vérin 18. On peut évidemment disposer sur la jambe fixe latéralement un système analogue permettant d'en faire varier l'inclinaison.

Revendications de brevet.

1. Tracteur enjambeur, caractérisé par le fait qu'il comporte : un train avant enjambeur à voie fixe ; et un train arrière enjambeur à voie variable dont une seule roue (5a ou 5b) est portée par une jambe (3a ou 3b) mobile latéralement de telle sorte que l'une des deux roues arrière (5a ou 5b) est fixe latéralement et est toujours sensiblement en alignement derrière la roue avant correspondante et circule toujours dans la même allée, tandis que l'autre roue arrière (5b ou 5a) est déplaçable latéralement depuis une poistion à voie étroite où elle est sensiblement en alignement derrière la roue avant correspondante (6b ou 6a) et une position à voie plus large.

2. Tracteur enjambeur selon la revendication 1, caractérisé par le fait que le train avant enjambe toujours un seul rang de vigne (B) ; le train arrière enjambant soit le même rang de vigne (B) soit deux rangs de vigne (B et C).

3. Tracteur enjambeur selon la revendication 1, caractérisé par le fait que le train avant enjambe toujours un nombre fixe "$\underline{n}$" de rangs de culture ; le train arrière enjambant de "$\underline{n} + 1$" jusqu'à "$2\underline{n}$" rangs de culture.

4. Tracteur enjambeur selon l'une quelconque des revendications précédentes, caractérisé par le fait que la jambe (3a ou 3b) mobile latéralement portant la roue arrière (5a ou 5b) est portée par un système d'arbres coulissants (10, 11), son déplacement étant commandé par un vérin (16).

5. Tracteur selon l'une quelconque des revendications 1 à 4, dans lequel l'entraînement de la roue arrière mobile latéralement (5a ou 5b) se fait par l'intermédiaire d'un arbre d'entraînement (25) relié par un système coulissant (24) à un arbre (23) coulissant dans un palier (26) porté par le châssis (1), cet arbre (23) étant relié par l'intermédiaire d'au moins un joint de cardan (27) à un pignon moteur (21) entraînant ladite roue arrière.

6. Tracteur selon la revendication 5, dans lequel au moins une des deux jambes (3a ou 3b) des roues arrière (5a ou 5b) est montée à rotation dans un plan vertical par rapport au châssis (1) et sont tenues chacune par un vérin (18).

7. Tracteur enjambeur selon l'une quelconque des revendications 1 à 6, caractérisé par le fait qu'il est muni, du côté de la roue arrière déplaçable latéralement (5b) d'une benne à vendange 12 ou réservoir.

8. Tracteur selon la revendication 7, dans lequel la benne (12), réservoir ou analogue est placé au-dessus de la roue (5b) déplaçable latéralement.

9. Tracteur selon la revendication 8, dans lequel le fond de la benne (12) (ou analogue) est en gradins (13, 14, 15) correspondant chacun à une position plus ou moins écartée de ladite roue (5b).

Fig.1

Fig.2

Fig. 3

0177375

Fig. 4

## DOCUMENTS CONSIDERES COMME PERTINENTS

| Catégorie | Citation du document avec indication en cas de besoin, des parties pertinentes | Revendication concernee | CLASSEMENT DE LA DEMANDE (Int Cl 4) |
|---|---|---|---|
| X | FR-A-2 540 060 (GILLY) * En entier; voir en particulier la figure 1 et page 2, lignes 10-17 * | 1,4 | B 62 D 49/06 B 62 D 21/18 |
| | --- | | |
| Y | FR-A-2 265 600 (LHOSPITALIER) * Figures 1,4 * | 1,4 | |
| | --- | | |
| Y | FR-A-2 329 501 (JACQUET) * En entier * | 1,4,6 | |
| | --- | | |
| Y | FR-A-1 427 919 (GOURD) * Figures 2,3; résumé * | 1-4 | |
| | --- | | |
| Y | FR-A-2 549 434 (BOBARD) * Revendication 5; figure 3; page 3, lignes 20-29 * | 1-3,6 | DOMAINES TECHNIQUES RECHERCHES (Int Cl 4) |
| | --- | | |
| A | FR-A-2 419 855 (JACQUET) | 1 | B 62 D |
| | --- | | |
| A | FR-A-1 539 177 (BOBARD) | 1 | |
| | --- | | |
| A | FR-A-2 024 728 (FONTAN et al.) | 1 | |
| | --- | | |
| A | FR-A-2 537 384 (BOBARD) * Figure 9 * | 7,8 | |
| | ---        -/- | | |

Le présent rapport de recherche a été établi pour toutes les revendications

| Lieu de la recherche LA HAYE | Date d'achèvement de la recherche 21-08-1985 | SCHMAL R. Examinateur |
|---|---|---|

# 0177375
Numero de la demande

**RAPPORT DE RECHERCHE EUROPEENNE**

Office européen
des brevets

EP 85 40 1494

Page 2

| Catégorie | Citation du document avec indication. en cas de besoin. des parties pertinentes | Revendication concernee | CLASSEMENT DE LA DEMANDE (Int Cl 4) |
|---|---|---|---|
| A | DE-B-1 112 697 (BOBARD)<br>* Figure 2 * | 1,5 | |

## DOCUMENTS CONSIDERES COMME PERTINENTS

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 21-08-1985 | SCHMAL R. |